(19) Europäisches Patentamt
European Patent Office
Office européen des brevets

(11) **EP 2 277 035 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.09.2025 Patentblatt 2025/38**

(45) Hinweis auf die Patenterteilung:
**30.11.2016 Patentblatt 2016/48**

(21) Anmeldenummer: **09742080.6**

(22) Anmeldetag: **06.05.2009**

(51) Internationale Patentklassifikation (IPC):
**G01N 27/406** (2006.01) **G01N 33/00** (2006.01)
**F02D 41/14** (2006.01)

(52) Gemeinsame Patentklassifikation (CPC):
**G01N 27/4065;** F02D 41/1456; F02D 41/1495;
F02D 2041/285

(86) Internationale Anmeldenummer:
**PCT/EP2009/055449**

(87) Internationale Veröffentlichungsnummer:
**WO 2009/135862 (12.11.2009 Gazette 2009/46)**

(54) **EINE AUSWERTE- UND STEUEREINHEIT FÜR EINE BREITBAND-LAMDASONDE**

EVALUATION AND CONTROL UNIT FOR A BROADBAND LAMBDA PROBE

UNITÉ D'ANALYSE ET DE COMMANDE

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR

(30) Priorität: **09.05.2008 DE 102008001697**

(43) Veröffentlichungstag der Anmeldung:
**26.01.2011 Patentblatt 2011/04**

(73) Patentinhaber: **Robert Bosch GmbH**
**70442 Stuttgart (DE)**

(72) Erfinder: **REISCHL, Rolf**
**70499 Stuttgart (DE)**

(56) Entgegenhaltungen:
EP-A1- 0 536 667       EP-A1- 1 707 960
EP-A2- 0 964 246       DE-A1- 10 163 912

DE-A1- 19 836 128       DE-A1- 19 836 128
GB-A- 2 327 271         JP-A- 2001 059 833
JP-A- 2002 250 710      JP-A- 2007 310 760
JP-A- 2008 008 667      JP-A- S61 116 451
JP-B2- 7 286 910        US-A- 4 142 493
US-A- 4 956 795         US-A- 5 345 384
US-A- 5 799 185         US-A- 6 052 057
US-A1- 2001 020 587     US-A1- 2002 060 150
US-A1- 2005 252 771     US-A1- 2008 116 071
US-B2- 7 142 976

• ROBERT BOSCH GMBH: "Product Information Lambda Probe Interface IC-CJ125", April 2006 (2006-04-01), pages 1 - 7, XP002538152, Retrieved from the Internet <URL:www.semiconductors.bosch.de/pdf/ CJ125_Product_Info.pdf> [retrieved on 20090720]

# EP 2 277 035 B2

**Beschreibung**

Die Erfindung betrifft eine Auswerte- und Steuereinheit für eine Breitband-Lambdasonde.

Stand der Technik

Zum Erreichen der heute geforderten Abgasgrenzwerte bei Kraftfahrzeugen wird ein geregelter Dreiwegekatalysator verwendet. Dieser sorgt dafür, dass die Abgaskomponenten Kohlemonoxid, Kohlenwasserstoffe und Stickoxide stark reduziert werden. Er besteht aus einem Keramikkörper, der sehr viele kleine Kanäle aufweist und mit Edelmetallpigmenten bestückt ist, die die eigentliche Katalysatorfunktion wahrnehmen. Streichen Abgase über die heiße Katalysatoroberfläche, dann zerlegen sich die genannten Abgaskomponenten in die harmlosen Verbindungen Wasser, Stickstoff und Kohlendioxid.

Damit die genannten Abgase miteinander reagieren, benötigt der Motor ein ausgewogenes stöchiometrisches Gemisch, das weder fett noch mager sein darf. Dies wird durch Verwendung einer Lambdasonde sichergestellt, die den Sauerstoffgehalt im Abgas misst und ihn an ein Steuergerät meldet. Dieses beeinflusst dann beispielsweise eine Einspritzanlage derart, dass das momentan benötigte Gemisch bereitgestellt wird.

Ein als Gemischverhältnissensor eingesetzter Sauerstoffsensor ist aus der US-A-4,568,443 bekannt. Bei diesem Sauerstoffsensor ist ein Messelement des Sensors mit einer inneren Gasdiffusionskammer ausgebildet, die mit einem Außenraum in Verbindung steht, der das zu messende Gas enthält. Das Messelement hat eine Messvorrichtung zum Ermitteln der Sauerstoffkonzentration der Atmosphäre bzw. des Gases in der inneren Gasdiffusionskammer, in welcher sich das unter einem vorbestimmten Diffusionswiderstand eingeleitete Messgas befindet. Die Messvorrichtung gibt ein Ausgangssignal ab, das die Sauerstoffkonzentration anzeigt. Des Weiteren weist das Messelement eine Sauerstoffpumpvorrichtung auf, die mit einem vom Ausgangssignal der Messvorrichtung abhängigen Pumpstrom betrieben wird, so dass die Sauerstoffkonzentration in der Gasdiffusionskammer auf einem vorbestimmten Wert gehalten wird. Der der Sauerstoffpumpvorrichtung zugeführte Pumpstrom wird ein Parameter erfasst, der die Sauerstoffkonzentration des Messgases beschreibt, d. h. die Abgase, die durch die Verbrennung eines Luft/Brennstoff-Gemisches erzeugt werden.

Aus der DE 198 38 466 A1 ist ein Verfahren zum Ansteuern eines Messfühlers zum Bestimmen einer Sauerstoffkonzentration in einem Gasgemisch, insbesondere in Abgasen von Verbrennungskraftmaschinen, bekannt. Dabei wird eine der Sauerstoffkonzentration entsprechende, von eine Nernst-Messzelle gelieferte Detektionsspannung von einer Schaltungsanordnung in eine Pumpspannung für eine Pumpzelle umgesetzt. Je nach Sauerstoffgehalt des Gasgemisches fließt ein anodischer oder ein kathodischer Gesamtstrom über die Pumpzelle. Bei stabilem Betrieb des Messfühlers, bei dem über eine wählbare Zeitspanne ein anodischer Grenzstrom fließt, wird die Pumpzelle und/oder die Nernst-Messzelle mit wenigstens einem, unabhängig von der gemessenen Detektionsspannung bzw. dem sich einstellenden Pumpstrom bereitgestellten Spannungspuls derart beaufschlagt, dass eine Depolarisierung des Messfühlers erfolgt.

Aus der DE 101 45 804 B4 ist eine Verfahren zum betrieb eines Stickoxidsensors zur Bestimmung der Stickoxidkonzentration in einem Gasgemisch, insbesondere bei der Abgasnachbehandlung eines Kraftfahrzeugs bekannt. Dabei wird zwischen einer inneren Pumpelektrode und einer äußeren Pumpelektrode einer Pumpzelle eine eine Pumpstrom bewirkende elektrische Pumpspannung angelegt. Mittels dieser wird in einem ersten Messgasraum durch Zu- oder Abpumpen von Sauerstoff ein konstanter Sauerstoffpartialdruck eingestellt. Die Pumpspannung wird derart geregelt, dass sich an den Elektroden einer Konzentrationszelle ein konstanter Spannungswert einstellt. Eine in einem zweiten Messgasraum angeordnete NOx-sensitive dritte Elektrode wird als zweite Pumpzelle betrieben, in der sich ein Grenzpumpstrom einstellt, der die NOx-Konzentration angibt. Innerhalb eines Messzeitfensters wird der Pumpstrom abgeschaltet oder kontrolliert reduziert und die NOx-Konzentration erfasst.

Aus der DE 102 21 392 B4 sind ein Verfahren und eine Vorrichtung zur Messung einer Gas-Konzentration in einem Messgas mittels eines Messaufnehmers bekannt. Der Messaufnehmer weist eine Außenelektrode, die mit einem Festkörperelektrolyten verbunden und dem Festgas ausgesetzt ist, und eine mit de Festkörperelektrolyten verbundene Elektrode auf, zwischen denen mittels eines durch den Festkörperelektrolyten fließenden Pumpstromes Sauerstoff pumpbar ist. Dabei wird der Pumpstrom zwischen die Referenzelektrode und die Elektrode getrieben. Als Pumpstrom wird periodisch eine Pulsfolge mit mehreren Einzelpulsen mit derselben Pulsbreite verwendet, wobei die Pulsbreite zur Einstellung eines Pegels des Pumpstroms von einem digitalen oder einem analogen Regler eingestellt wird.

Aus der DE 101 63 912 A1 sind ein Gassensor, insbesondere eine Lambdasonde, und ein Verfahren zur Steuerung eines Gassensors bekannt. Dabei weist der Gassensor eine erste, einem Messgas ausgesetzte Elektrode und eine zweite, einem Referenzgas ausgesetzte Elektrode auf. Des Weiteren ist eine Regel- und Auswerteschaltung vorgesehen. Dieser wird ein Signal über Betriebszustände des Gesamtsystems zugeführt. Bei Betriebszuständen, bei denen das Messgas weitgehend oder in der Konzentration einer Gaskomponente dem Referenzgas entspricht, vergleicht die Regel- und Auswerteschaltung das Messsignal automatisch mit einem vorgegebenen Wert. Dies ermöglicht es, einen Gassensor bereitzustellen, der auch bei einem Einsatz in korrosiven Gasgemischen eine hohe Standzeit und eine gute Messgenauigkeit aufweist.

Aus der DE 102 16 724 C1 ist ein Verfahren zum Betreiben einer Breitband-Lambdasonde für die Bestimmung der Sauerstoffkonzentration im Abgas einer mit einem Kraftstoff-Luft-Gemisch betriebenen Brennkraftmaschine bekannt, bei welcher eine wiederholte Umpolung der Pumpspannung währen der Dauer einer Kraftstoffnacheinspritzung im Magerbetrieb der Brennkraftmaschine und/oder während der Aufheizphase der Lambdasonde vorgenommen wird. Zur wiederholten Umpolung der Pumpspannung wird an die Pumpzelle eine Pulsfolge von Spannungspulsen mit konstanter Amplitude gelegt und es wird durch eine Pulsweitenmodulation der Spannungspulse in Abhängigkeit von der Nernstspannung der Nernstzelle ein effektiver Pumpstrom eingestellt. Alternativ dazu kann zur wiederholten Umpolung der Pumpspannung an die Pumpzelle eine Pulsfolge von Spannungspulsen mit konstanter Pulsbreite gelegt werden und durch ein Änderung der Amplituden der Spannungspulse in Abhängigkeit von der Nernstspannung der Nernstzelle ein effektiver Pumpstrom eingestellt werden. Der Pulsbetrieb der Pulszelle kann im Mager- und Fettbetrieb der Brennkraftmaschine durchgehend beibehalten werden.

Aus der DE 10 2004 047 797 A1 ist ein weiteres Sensorelement bekannt, welches zur Bestimmung des Sauerstoffpartialdrucks in einem Abgas einer Brennkraftmaschine vorgesehen ist. Dieses Sensorelement enthält mindestens eine elektrochemische Messzelle, die eine erste Elektrode und eine zweite Elektrode umfasst, die durch einen Festelektrolyten elektrisch verbunden sind. Die zweite Elektrode ist in einem Gasraum angeordnet, der mit dem außerhalb des Sensorelementes befindlichen Messgas über ein erstes, ein katalytisch aktives Material aufweisendes Element und ein zweites, diffusionsbegrenzendes Element verbunden ist. Das erste Element weist in Diffusionsrichtung des Messgases eine Länge von mindestens 1 mm auf. Dies ermöglicht dem Sensorelement, den Sauerstoffpartialdruck des Messgases mit einer vergrößerten Ansprechgeschwindigkeit zu messen. Weiterhin ist eine genaue Messung des Sauerstoffpartialdrucks auch bei sogenanntem Ungleichgewichtsmessgas oder Mehrkomponentenmessgas möglich.

Des Weiteren ist der von der Anmelderin entwickelte integrierte Schaltkreis CJ125 bekannt, bei dem es sich um einen Kontroll- und Verstärkerkreis für einen Breitband-Lambdasensor handelt. Dieser Schaltkreis wird zwischen den Breitband-Lambdasensor und einen Mikrocomputer geschaltet. Seine Aufgabe besteht unter anderem darin, die vom Breitband-Lambdasensor gelieferte Nernstspannung mittels eines analogen Auswertekonzeptes auszuwerten und dem Breitband-Lambdasensor eine von der Nernstspannung abhängige Pumpspannung zuzuführen. Produktinformationen über diesen integrierten Schaltkreis sind aus dem Internet unter der Adresse www.semiconductors.bosch.de/pdf/CJ125_Product_Info.pdf abrufbar.

Dokument DE 198 36 128 A1 offenbart eine Auswerte-und Steuereinheit für eine Breitband-Lambdasonde, mit einer Signalaufbereitungseinheit, elnem mit der Signalaufbereitungseinheit verbundenen Analog-Digital-Wandler, einem mit dem Analog-Digital-Wandler verbundenen Pumpstromregler, einer mit dem Pumpstromregler verbundenen Steuerung, einer Pumpstromquelle zur Bereitstellung eines Pumpstromes, einem inneren Pumpelektrodenanschluss ; einem äußeren Pumpelektrodenanschluss und einem Referenzelektrodenanschluss, wobei die Signalaufbereitungseinheit zur Ermittlung eines Istwertes für den Pumpstromregler der Lambdasonde vorgesehen ist.

Vorteile der Erfindung

Eine Auswerte- und Steuereinheit mit den im Anspruch 1 angegebenen Merkmalen weist den Vorteil auf, dass sie zusätzlich zu einer Ermittlung des Istwertes für den Pumpstromregler auch weitere Informationen über den Betriebszustand der Breitband-Lambdasonde ermittelt und an einer Digitalschnittstelle zur Verfügung stellt. Diese weiteren Informationen können in vielfältiger Weise verwendet werden, beispielsweise zur Realisierung einer Kabeldiagnose nach CARB, zur Sicherstellung, dass die Elektrodenanschlüsse RE, IPE und APE der Breitband-Lambdasonde in jedem Betriebszustand einen erlaubten Spannungsbereich von 0 V bis Umax nicht verlassen, zur kontinuierlichen Beobachtung der Elektrodenpolarisation der Breitband-Lambdasonde, zu einer Überwachung der Breitband-Lambdasonde im Hinblick auf deren Alterung, zur Beobachtung des Lambdal-Durchganges beim Vorliegen einer Grenzstromsonde und zur Detektion der Betriebsbereitschaft der vorliegenden Lambdasonde. Dadurch wird die Funktionalität einer Auswerte- und Steuereinheit erweitert.

Zur Ermittlung dieser weiteren Informationen über den Betriebszustand der Breitband-Lambdasonde kann die ohnehin vorhandene, zur Ermittlung eines Istwertes für den Pumpstromregler und zur Ermittlung des Innenwiderstandes der Lambdasonde vorgesehene Signalaufbereitungseinheit mitverwendet werden.

Gemäß einer Ausführungsform werden die von der Signalaufbereitungseinheit ermittelten weiteren Informationen über den Betriebszustand der Breitband-Lambdasonde über einen Analog-Digital-Wandler direkt der Digitalschnittstelle zugeführt. Von dort aus können sie verzögerungsfrei beispielsweise einem angeschlossenen uC zugeführt werden. Dieses wiederum kann die übertragenen weiteren Informationen auswerten und eventuell notwendige Reaktionen, beispielsweise eine Änderung des Kraftstoffgemisches oder die Anzeige eines Warnsignals, schnell in die Wege leiten.

Eine alternative Ausführungsform besteht darin, die von der Signalaufbereitungseinheit ermittelten weiteren Informationen über den Betriebszustand der Breitband-Lambdasonde nach einer Analog-Digital-Wandlung in einem Zwischenspeicher der Auswerte- und Steuereinheit zwischenzuspeichern bzw. dort zu sammeln und die gesammelten Informationen in Form eines Datenbursts über die Digitalschnittstelle auszugeben.

Eine weitere alternative Ausführungsform besteht darin, die von der Signalaufbereitungseinheit ermittelten weiteren Informationen über den Betriebszustand der Breitband-Lambdasonde nach einer Analog-Digital-Wandlung in einem Zwischenspeicher der Auswerte- und Steuereinheit unter vorgegebenen Adressen zu speichern, so dass beispielsweise ein externer uC die Möglichkeit hat, über die Digitalschnittstelle durch eine geeignete Adressierung des Zwischenspeichers auf gewünschte weitere Informationen über den Betriebszustand der Breitband-Lambdasonde zuzugreifen.

In vorteilhafter Weise weist die Auswerte- und Steuereinheit eine einzige Pumpstromquelle auf, die über einen Schalter mit dem inneren Pumpelektrodenanschluss der Auswerte- und Steuereinheit und über einen weiteren Schalter mit dem äußeren Pumpelektrodenanschluss der Auswerte- und Steuereinheit verbunden ist. Dies ermöglicht es, durch eine geeignete Steuerung dieser Schalter die Stromrichtung in gewünschter Weise zu organisieren.

In vorteilhafter Weise handelt es sich bei dem Pumpstrom um einen impulsförmigen Pumpstrom, der eine feste Frequenz, ein veränderbares Tastverhältnis und ein einstellbares Vorzeichen aufweist. Dies erlaubt es, den Istwert für den Pumpstromregler, den Innenwiderstand der Lambdasonde und die weiteren Informationen über den Betriebszustand der Lambdasonde während der Impulspausen dieses impulsförmigen Pumpstromes zu ermitteln.

Vorzugsweise erfasst die Signalaufbereitungseinheit in jeder Impulspause Daten zur Ermittlung des Istwertes für den Pumpstromregler. Dies hat den Vorteil, dass die Regelung des Pumpstromes schnell auf geänderte Istwerte reagieren kann.

Des Weiteren erfasst die Signalaufbereitungseinheit vorzugsweise in aufeinanderfolgenden Impulspausen Daten zur Ermittlung unterschiedlicher weiterer Informationen über den Betriebszustand der Breitband-Lambdasonde, wobei diese Daten vorzugsweise zyklisch erfasst werden. Dies hält die Anzahl der in jeder Impulspause ermittelten Informationen niedrig und reduziert die Anforderungen an die Signalverarbeitungsgeschwindigkeit.

Vorzugsweise enthält die Auswerte- und Steuereinheit einen Parameterspeicher, in welchem ein Datensatz abgespeichert ist, der einer vorgegebenen Regelcharakteristik des digitalen Reglers entspricht und der über SPI geladen werden kann. Dies ermöglicht es, die Auswerte und Steuereinheit im Zusammenhang mit verschiedenen Typen von Lambdasonden bzw. im Zusammenhang mit Lambdasonden unterschiedlicher Hersteller verwenden zu können. Beispielsweise kann die Auswerte- und Steuereinheit zusammen mit Breitbandsonden mit Referenzelektrode der Anmelderin und anderer Hersteller verwendet werden und auch zusammen mit Grenzstromsonden verwendet werden.

Die Auswerte- und Steuereinheit kann in Form eines eigenständigen Bauteils zwischen die jeweils vorliegende Lambdasonde und ein Steuergerät geschaltet werden oder alternativ dazu auch in Form eines ASICs integrierter Bestandteil eines Steuergerätes sein.

Durch die Möglichkeit, verschiedene Parameterdatensätze in der Auswerte- und Steuereinheit abzuspeichern, wird auch die Voraussetzung dafür geschaffen, dass die Auswerte- und Steuereinheit im Zusammenhang mit Sonden unterschiedlicher Hersteller verwendbar ist.

Vorzugsweise weist die Auswerte- und Steuereinheit mehrere weitere Schalter auf, deren Schaltersteuersignale von der Steuerung bereitgestellt werden. Mittels dieser weiteren Schalter wird in vorteilhafter Weise erreicht, dass ein jeweils gewünschter Anschluss bzw. jeweils gewünschte Anschlüsse der Auswerte- und Steuereinheit mit einem jeweils gewünschten Bezugspotential, beispielsweise Masse, verbunden werden, um der Signalaufbereitungseinheit einen momentan gewünschten Messwert zur Verfügung stellen zu können. Die Bereitstellung der Messwerte und deren Auswertung kann in vorteilhafter Weise in sehr kurzer Zeit erfolgen, so dass das Gesamtsystem schnell notwendige Schritte in die Wege leiten kann.

Weitere vorteilhafte Eigenschaften der Erfindung ergeben sich aus deren nachfolgender Erläuterung anhand der Zeichnung.

Zeichnung

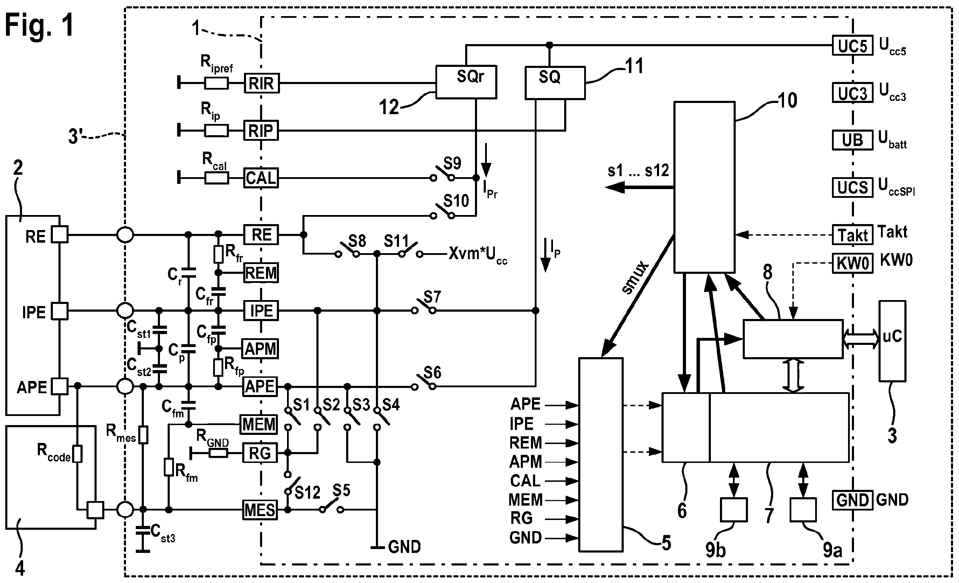

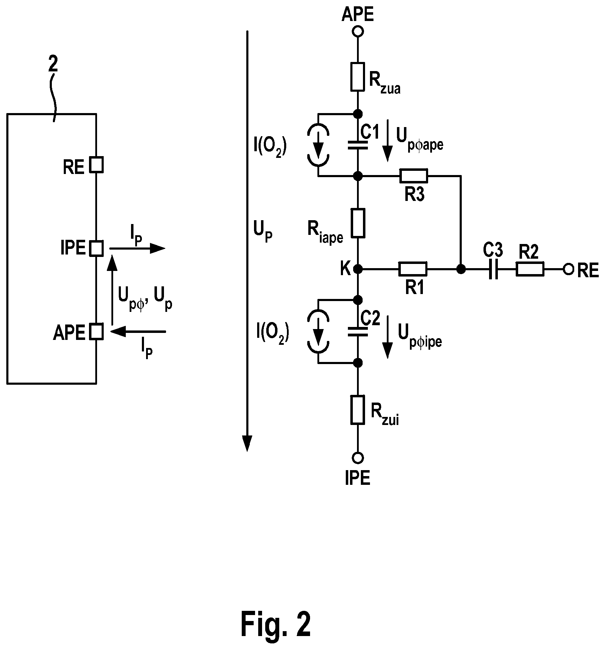

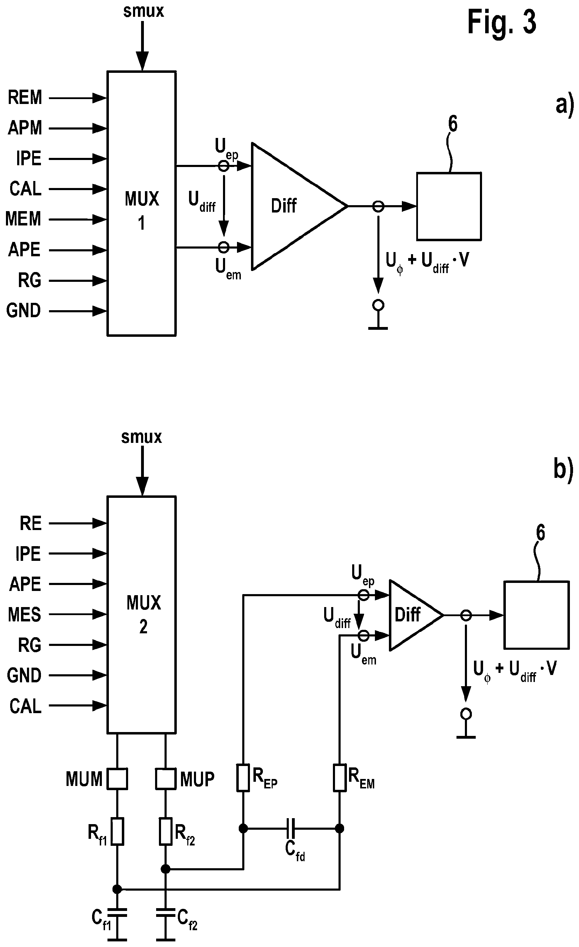

Die Figur 1 zeigt eine Skizze einer Auswerte- und Steuereinheit, die mit einer Breitband-Lambdasonde, einem Stecker und einem uC verbunden ist. Die Figur 2 veranschaulicht Beispiele für die Erzeugung des pulsförmigen Pumpstromes. Die Figur 3 zeigt Ausführungsbeispiele für eine Signalaufbereitung in der Signalaufbereitungseinheit 5 von Figur 1.

Beschreibung

Die Figur 1 zeigt eine Skizze einer Auswerte- und Steuereinheit 1, die mit einer Breitband-Lambdasonde 2, einem Steuergerät 3 und einem Sondenstecker 4 verbunden ist. Die Steuer- und Auswerteeinheit 1 kann alternativ dazu auch integrierter Bestandteil eines Steuergerätes sein, wie es durch die gestrichelte Linie 3' veranschaulicht ist. Die Steuer- und Auswerteeinheit 1 ist vorzugsweise in Form eines ASICs realisiert, d.h. in Form einer anwendungsspezifischen integrierten Schaltung.

Die Auswerte- und Steuereinheit 1 weist eine Vielzahl von Anschlüssen auf. Zu diesen Anschlüssen gehören ein Applikationswiderstandsanschluss RIR, ein Applikationswiderstandsanschluss RIP, ein Kalibrierwiderstandsanschluss CAL, ein Referenzelektrodenanschluss RE, ein Messeingang REM, ein innerer Pumpelektrodenanschluss IPE, ein Messeingang APM, ein äußerer Pumpelektrodenanschluss APE, ein Messeingang MEM, ein Massewiderstandsanschluss RG, ein Messeingang MES, Spannungsversorgungsanschlüsse UC5, UC3, UB und UCS, ein Takteingang TAKT, ein Eingang KW0 für ein Kurbelwellensignal, 4 SPI-Anschlüsse und ein Masseanschluss GND.

Der Referenzelektrodenanschluss RE der Steuer- und Regeleinheit 1 ist mit dem Referenzelektrodenanschluss RE der Breitband-Lambdasonde 2 verbunden. Der innere Pumpelektrodenanschluss IPE der Steuer- und Regeleinheit 1 ist mit dem inneren Pumpelektrodenanschluss IPE der Breitband-Lambdasonde 2 verbunden. Der äußere Pumpelektrodenanschluss APE der Steuer- und Regeleinheit 1 ist mit dem äußeren Pumpelektrodenanschluss APE der Breitband-Lambdasonde 2 verbunden. Der Messeingang MES der Steuer-und Regeleinheit 1 ist über einen Ohmschen Widerstand $R_{Code}$, welcher Bestandteil des Steckers 4 ist, mit dem äußeren Pumpelektrodenanschluss APE der Breitband-Lambdasonde 2 verbunden.

Dem Takteingang TAKT der Steuer- und Regeleinheit 1 wird ein im µC3 generiertes Taktsignal Takt zugeführt. Dem Eingang KW0 der Steuer- und Regeleinheit 1 wird vom uC 3 ein Kurbelwellensignal KW0 zugeführt. Letzteres Signal koppelt die Zeitpunkte, an welchen in der Steuer- und Regeleinheit 1 Messdaten erfasst werden, mit Zeitabläufen in der Motorsteuerung.

Des Weiteren steht uC 3 über einen Datenbus mit einer als SPI-Schnittstelle realisierten Digitalschnittstelle 8 der Steuer- und Regeleinheit 1 in Verbindung. Über diesen Datenbus erfolgt ein bidirektionaler Datenaustausch zwischen dem uC 3 und der Steuer- und Regeleinheit 1.

Der Applikationswiderstandsanschluss RIR der Steuer- und Regeleinheit 1 steht über einen Ohmschen Widerstand $R_{ipref}$ mit einem Referenzpotential in Verbindung und ist innerhalb der Steuer- und Regeleinheit 1 mit einer Referenzstromquelle 12 verbunden. Der Applikationswiderstandsanschluss RIP der Steuer- und Regeleinheit 1 steht über einen Ohmschen Widerstand $R_{ip}$ mit Masse in Verbindung und ist innerhalb der Steuer- und Regeleinheit 1 mit einer Pumpstromquelle 11 verbunden. Der Kalibrierwiderstandsanschluss CAL der Steuer- und Regeleinheit 1 steht über einen Ohmschen Widerstand $R_{cal}$ mit einem Referenzpotential in Verbindung und ist innerhalb der Steuer- und Regeleinheit 1 über einen Schalter S9 mit der Referenzstromquelle 12 verbunden.

Der Referenzelektrodenanschluss RE der Steuer- und Regeleinheit 1 ist über einen Ohmschen Widerstand $R_{fr}$ mit dem Messeingang REM verbunden. Der Messeingang REM steht über einen Kondensator $C_{fr}$ mit dem inneren Pumpelektrodenanschluss IPE der Steuer- und Regeleinheit 1 in Verbindung. Parallel zur Reihenschaltung von $R_{fr}$ mit $C_{fr}$ ist ein weiterer Kondensator $C_r$ geschaltet, der folglich auch zwischen die Referenzelektrode RE der Breitband-Lambdasonde 2 und die innere Pumpelektrode IPE der Breitband-Lambdasonde 2 geschaltet ist.

Der innere Pumpelektrodenanschluss IPE der Steuer- und Regeleinheit 1 ist über einen Kondensator $C_{fp}$ mit dem Messeingang APM verbunden. Der Messeingang APM steht über einen Ohmschen Widerstand $R_{fp}$ mit dem äußeren Pumpelektrodenanschluss APE der Steuer- und Regeleinheit 1 in Verbindung. Parallel zur Reihenschaltung von $C_{fp}$ und $R_{fp}$ ist ein Kondensator $C_p$ geschaltet, der folglich auch zwischen die innere Pumpelektrode IPE der Breitband-Lambdasonde 2 und die äußere Pumpelektrode APE der Breitband-Lambdasonde geschaltet ist. Des Weiteren ist parallel zum Kondensator $C_p$ eine Reihenschaltung zweier Kondensatoren $C_{st1}$ und $C_{st2}$ geschaltet. Der Verbindungspunkt zwischen den Kondensatoren $C_{st1}$ und $C_{st2}$ ist mit Masse verbunden.

Der äußere Pumpelektrodenanschluss APE der Steuer- und Regeleinheit 1 steht über einen Kondensator $C_{fm}$ mit dem Messeingang MEM in Verbindung. Der Messeingang MEM ist über einen Ohmschen Widerstand $R_{fm}$ mit dem Messeingang MES der Steuer- und Regeleinheit 1 verbunden. Parallel zur Reihenschaltung von $C_{fm}$ und $R_{fm}$ ist ein Messwiderstand $R_{mess}$ geschaltet. Dieser ist folglich auch parallel zu dem Widerstand $R_{Code}$ des Steckers 4 geschaltet.

Der Massewiderstandsanschluss RG der Steuer- und Regeleinheit 1 steht über einen Ohmschen Widerstand $R_{GND}$ mit Masse in Verbindung. Der Messeingang MES der Steuer- und Regeleinheit 1 ist über einen Kondensator $C_{st3}$ mit Masse verbunden.

Innerhalb der Steuer- und Regeleinheit 1 ist der Referenzelektrodenanschluss RE der Steuer- und Regeleinheit 1 über einen Schalter S10 an die Referenzstromquelle 12 angeschlossen. Des Weiteren steht der Referenzelektrodenanschluss RE über eine Reihenschaltung zweier Schalter S8 und S11 mit einer Referenzspannung von Xvm $\cdot U_{cc}$ in Verbindung. Der Verbindungspunkt zwischen den Schaltern S8 und S11 ist über einen Schalter S4 mit Masse verbunden. Des Weiteren ist der Verbindungspunkt zwischen den Schaltern S8 und S11 auch mit dem inneren Pumpelektrodenanschluss IPE der Steuer- und Regeleinheit 1 verbunden.

Der innere Pumpelektrodenanschluss IPE der Steuer- und Regeleinheit 1 steht innerhalb der Steuer- und Regeleinheit 1 des Weiteren über einen Schalter S2 mit dem Massewiderstandsanschluss RG der Steuer- und Regeleinheit 1 in Verbindung. Der äußere Pumpelektrodenanschluss APE steht innerhalb der Steuer- und Regeleinheit 1 über einen Schalter S1 mit dem Massewiderstandsanschluss RG der Steuer- und Regeleinheit in Verbindung. Ferner ist der äußere Pumpelektrodenanschluss APE der Steuer- und Regeleinheit 1 innerhalb der Steuer- und Regeleinheit auch über einen Schalter S3 auf Masse GND gelegt.

Der Massewiderstandsanschluss RG der Steuer- und Regeleinheit 1 ist innerhalb der Steuer- und Regeleinheit 1 über einen Schalter S12 mit dem Messeingang MES der Steuer- und Regeleinheit 1 verbunden. Schließlich steht der Messeingang MES der Steuer- und Regeleinheit 1 innerhalb der Steuer- und Regeleinheit 1 über einen Schalter S5 mit Masse GND in Verbindung.

Die Schaltersteuersignale s1,...,s12 für die oben genannten Schalter S1,...,S12 werden von einer Steuerung 10 bereitgestellt. Die Steuerung 10 erzeugt dieses Schaltersteuersignale in Abhängigkeit von dem Taktsignal Takt, welches vom Steuergerät 3' bereitgestellt wird, von Datensignalen, die vom uC 3 bereitgestellt und der Steuerung über die Digitalschnittstelle 8 zugeführt werden und von den Ausgangssignalen des digitalen Reglers 7. Die Hauptaufgabe des digitalen Reglers 7 besteht darin, aus den ihm zugeführten Eingangssignalen ein Pumpstromregelsignal für die Steuerung 10 zu generieren und der Steuerung 10 zuzuführen. Dieses Pumpstromregelsignal beeinflusst die Pulsbreite und die Stromrichtung des impulsförmigen Pumpstromes.

Der digitale Regler 7 führt zur Ermittlung seiner für die Steuerung 10 vorgesehenen Pumpstromregelsignale einen Vergleich von ihm über den Analog-Digital-Wandler 6 zugeführten Istwertsignalen mit Sollwertsignalen durch und erzeugt die Pumpstromregelsignale in Abhängigkeit vom Ergebnis dieses Vergleiches.

Die Steuerung 10 ist ausgangsseitig auch mit der Signalaufbereitungseinheit 5 und dem Analog-Digital-Wandler 6 verbunden, um diesen Baugruppen Zeitsteuersignale zuzuführen, die mit dem Taktsignal Takt synchronisiert sind.

Der digitale Regler 7 ist mit einem Zwischenspeicher 9a verbunden. Der Zwischenspeicher 9a ist zur Abspeicherung des Tastverhältnisses und Vorzeichen der Pumpstromimpulse und der oben genannten weiteren Informationen über den Betriebszustand der Breitband-Lambdasonde vorgesehen. Diese Abspeicherung der weiteren Informationen über den Betriebszustand im Zwischenspeicher 9a hat den Zweck, die genannten weiteren Informationen über den Betriebszustand der Breitband-Lambdasonde im Zwischenspeicher zu sammeln und dann die gesammelten weiteren Informationen in Form eines Datenbursts über die Digitalschnittstelle 8 an das Steuergerät 3 zu übertragen.

Alternativ dazu können das Tastverhältnis und Vorzeichen der Pumpstromimpulse und die genannten weiteren Informationen über den Betriebszustand der Breitband-Lambdasonde 2 auch im Zwischenspeicher 9a an vorgegebenen Adressen abgespeichert werden. In diesem Fall besteht für das externe Steuergerät 3 die Möglichkeit, durch eine geeignete Adressierung des Zwischenspeichers 9a über die Digitalschnittstelle 8 gezielt auf gewünschte Informationen über den Betriebszustand der Breitband-Lambdasonde 2 zuzugreifen.

Des Weiteren ist der digitale Regler 7 mit einem Parameterspeicher 9b verbunden. In diesem Parameterspeicher 9b ist ein Datensatz abgespeichert, der einer vorgegebenen Regelcharakteristik des digitalen Reglers 7 entspricht. Die Regelcharakteristik ist einem bestimmten Typ der Lambdasonde 2 zugeordnet. Durch diese Möglichkeit einer Veränderung der jeweils benötigten Regelcharakteristik in dem Speicher 9b ist die Steuer- und Regeleinheit 1 dazu in der Lage, mit unterschiedlichen Lambdasondentypen verwendet werden zu können. Diese universelle Einsetzbarkeit der Steuer- und Regeleinheit 1 erlaubt eine Herstellung der Steuer- und Regeleinheit 1 in Form eines ASICs in großer Stückzahl. Dadurch werden die Fertigungskosten einer derartigen Steuer- und Regeleinheit vergleichsweise niedrig gehalten.

Die Signalaufbereitungseinheit 5 dient zur Ermittlung eines Istwertes für den Pumpstromregler 7 und zu einer Signalaufbereitung für die Ermittlung des Innenwiderstandes $R_i$ der Breitband-Lambdasonde 2. Darüber hinaus ist die Signalaufbereitungseinheit 5 bei der vorliegenden Erfindung auch dazu vorgesehen, die genannten weiteren Informationen über den Betriebszustand der Breitband-Lambdasonde zu ermitteln. Um diese Aufgaben durchführen zu können, ist die Signalaufbereitungseinheit 5 eingangsseitig mit dem äußeren Pumpelektrodenanschluss APE, dem inneren Pumpelektrodenanschluss IPE, dem Messeingang REM, dem Messeingang APM, dem Kalibrierwiderstandsanschluss CAL, dem Messeingang MEM und dem Massewiderstandsanschluss RG verbunden und bezieht von dort Eingangssignale, die eine Erfassung eines jeweils gewünschten Messwertes ermöglichen. Um einen gewünschten Messwert bereitzustellen, werden die Eingänge eines Differenzverstärkers durch einen von der Steuerung 10 gesteuerten Multiplexer mit jeweils zwei zu erfassenden Potentialen verbunden. Der Differenzverstärker verstärkt das Differenzsignal und gibt es mit definiertem Potentialbezug an den ADC weiter.

Die Steuerung 10 erzeugt die Schaltersteuersignale s6 und s7 für die Schalter S6 und S7 derart, dass am inneren bzw. äußeren Pumpelektrodenanschluss ein impulsförmiger Pumpstrom mit fester Frequenz, veränderbarem Tastverhältnis und einstellbarem Vorzeichen auftritt. Des Weiteren erzeugt die Steuerung 10 die Schaltersteuersignale für die die weiteren Schalter derart, dass ein jeweils gewünschter Messwert während der Impulspausen und während des Stromimpulses des impulsförmigen Pumpstromsignals erfasst werden kann.

Nachfolgend wird anhand der Figur 2 die Erzeugung des pulsförmigen Pumpstromes $I_P$ erläutert. Dabei ist auf der linken Seite von Figur 2 die Sonde 2 und auf der rechten Seite von Figur 2 ein Sondenersatzschild dargestellt.

In der linken Darstellung von Figur 2 sind die Anschlüsse RE, IPE und APE der Sonde sowie die Richtung des Stroms $I_P$ und der Spannungen $U_{pO}$ und $U_p$ gezeigt.

Aus dem auf der rechten Seite zur Figur 2 gezeigten Ersatzschaltbild ist ersichtlich, dass der Anschluss APE der Sonde über eine Reihenschaltung eines Widerstandes $R_{zua}$ mit einem Kondensator C1 und einem Widerstand $R_{iape}$ mit

einem Schaltungspunkt K verbunden ist. Am Kondensator C1 fällt eine Spannung $U_{pOape}$ ab. Parallel zum Kondensator C1 ist eine Stromquelle $I(O_2)$ angeordnet.

Der Anschluss IPE der Sonde ist über eine Reihenschaltung eines Widerstandes $R_{zui}$ mit einem Kondensator C2 ebenfalls mit dem Schaltungspunk K verbunden. Am Kondensator C2 fällt eine Spannung $U_{p0ipe}$ ab. Parallel zum Kondensator C2 ist eine Stromquelle $I(O_2)$ vorgesehen.

Der Schaltungspunkt K ist des Weiteren über eine Reihenschaltung eines Widerstandes R1 mit einem Kondensator C3 und einem Widerstand R2 mit dem Anschluss RE verbunden. Der Verbindungspunkt zwischen dem Widerstand R1 und dem Kondensator C3 steht über einen Widerstand R3 mit dem Verbindungspunkt zwischen dem Kondensator C1 und dem Widerstand $R_{iape}$ in Verbindung. Zwischen den Anschlüssen APE und IPE ist die Spannung Up abgreifbar.

Für die Spannung $U_p$ gilt die folgende Beziehung:

$$U_p = U_{pC} + (R_{zua} + R_{zui} + R_{iape}) \bullet I_p.$$

Dabei gilt:

$$U_{p0} = U_{p0ape} + U_{pCipe}.$$

$U_{p0}$ kann Werte zwischen -2 V und +2 V annehmen. Die Elektrodenkapazitäten sind üblicherweise größer als 100 $\mu$F. Dies hat zur Folge, dass der Ladezustand während einer Taktperiode erhalten bleibt.

Es ergeben sich folgende Betriebsfälle (siehe auch Fig. 1):

1.) $U_{p0} > 0$, $I_p > 0$: Schalter S6 und S4 sind geschlossen;
2.) $U_{p0} < 0$, $I_p < 0$: Schalter S7 und S3 sind geschlossen;
3.) $U_{p0} > 0$, $I_p < 0$: Schalter S7 und S1 sind geschlossen;
4.) $U_{p0} < 0$, $I_p > 0$: Schalter S6 und S2 sind geschlossen.

Dabei entsprechen die Betriebsfälle 1 und 2 der Standardsituation und die Betriebsfälle 3 und 4 dem Gegenpulsbetrieb.

Durch das Schließen der Schalter S1 bzw. S2 beim Gegenpulsbetrieb wird in vorteilhafter Weise erreicht, dass aufgrund des Spannungsabfalls $I_p \bullet R_{GND}$ (siehe Figur 1) das Potential an den Anschlüssen APE bzw. IPE nicht unter das Massepotential absinkt. Die Entscheidung über die Wahl des Strompfades wird anhand des Vorzeichens von $U_{p0}$ getroffen.

Für die Grundfunktionen der Steuer- und Regeleinheit 1, nämlich die Pumpstromregelung, bestehen zwei Möglichkeiten: Die erste Möglichkeit besteht darin, als Regleristwert die Spannung an der Referenzelektrode RE in den Pulspausen auszuwerten. Dadurch stützt sich die Regelung in höherem Masse auf die Nernstspannung und regelt damit die Gaszusammensetzung im Sondenhohlraum (IPE) präziser als bei Systemen mit analoger Auswertung. Umladevorgänge der Elektrodenkapazitäten, die durch pumpstromproportionale Anteile der Referenzspannung bedingt sind, und ein damit verbundener Dynamikverlust werden damit vermieden. Die zweite Möglichkeit für die Pumpstromregelung besteht darin, als Regleristwert die durchschnittliche Spannung während einer Pulsperiodendauer zu verwenden, wobei ein Sigma-Delta-Wandler zum Einsatz kommt. Dies entspricht der Vorgehensweise bei analogem Betrieb. Die Nachteile des analogen Betriebes, die in dem Einfluss der pumpstromproportionalen Anteile von Ure und dem dadurch bedingten Dynamikverlust bestehen, können dadurch vermieden werden, dass der Sollwert des Reglers entsprechend dem stromproportionalen Anteil von Ure nachgeführt wird. Der stromproportionale Anteil kann mit den oben beschriebenen Messwerterfassungseinrichtungen als Differenz Ure(Ip)-Ure(Ip=0) erfasst werden.

Für die Funktion der Innenwiderstandsmessung ergeben sich die beiden folgenden Möglichkeiten: Die erste Möglichkeit besteht darin, eine Messung des Innenwiderstandes $R_i$ in den Impulspausen an der Referenzelektrode vorzunehmen. Dabei wird die Differenz gebildet zwischen der unbelasteten Spannung Ure, die den Istwert für die Pumpstromregelung darstellt, und der durch die Referenzstromquelle 12 belasteten Spannung Ure. Die zweite Möglichkeit besteht darin, eine Messung des Innenwiderstandes $R_i$ an der Pumpzelle als Differenz der Pumpspannung zwischen APE und IPE unbelastet ($I_p$=0) und belastet ($I_p$>0) vorzunehmen. Da das ungünstige Widerstandsverhältnis der Zuleitungswiderstände aus Platin mit positivem Temperaturkoeffizienten die Temperaturmessempfindlichkeit reduziert, entsteht die Notwendigkeit, den Signalanteil der Zuleitung zu kompensieren. Dies ist zum Teil möglich, wenn man die Differenz zwischen Ure($I_p$>0) - Ure ($I_p$=0) als Maß für den Zuleitungswiderstand an die innere Pumpelektrode auswertet und damit die Innenwiderstandsmessung korrigiert.

Bei kalter Sonde ($R_i$ - kalt > 100 kOhm) wird die Referenzzelle RE-IPE zur Messbereichserweiterung durch den Schalter S8 überbrückt. Die Innenwiderstandsmessung gibt dann den Widerstandswert des Schalters wieder. Nähert sich die Sondentemperatur dem Betriebsbereich ($R_i \approx 6$ kOhm), dann ist dies durch die Innenwiderstandsmessung erkennbar. Da der Wert bei kalter Sonde vorliegt ($R_i$-kalt $\parallel$S8), kann der Innenwiderstand der Sonde aus der Kaltmessung und dem aktuellen Wert errechnet werden.

Für die Erzeugung des Referenzpumpstroms bzw. die Erzeugung eines künstlichen Referenzsauerstoffgases an der Referenzelektrode RE von durchschnittlich 20 μA wird die gleiche Referenzstromquelle 12 benutzt, mit der auch die Innenwiderstandsmessung an der Referenzelektrode durchgeführt wird. Der Durchschnittswert $I_{pref}$ = 20 μA ergibt sich aus dem zeitlichen Mittelwert des Innenwiderstands-Messimpulses von 80 μs, der Pulsperiodendauer (2 ms →jede dritte Taktperiode) und der Amplitude des Stromimpulses $I_{pr}$ = 570 μA.

Eine Kalibrierung der Sondenkennlinie (Ipcal) auf den Abgleichzustand der Sonde wird dann durchgeführt, wenn die Pumpzelle stromlos ist. Dazu wird die Pumpstromquelle auf den Messwiderstand geschaltet, dem der Abgleichwiderstand im Stecker 4 parallel geschaltet ist. Der Spannungsabfall des Pumpstromes an $R_m = R_{mess} \parallel R_{code}$ multipliziert mit dem eingestellten Tastverhältnis geteilt durch den Nennwert $R_{mess}$ ergibt den Pumpstrom der Sollkennlinie $I_p$ = f (Lambda). Die an den Elektroden APE und IPE gemessenen Ladungszustände (Polarisation) werden bei der Wahl des Massebezugs berücksichtigt, um sicherzustellen, dass die Sondenanschlüsse den erlaubten Spannungsbereich von 0 V bis Umax nicht verlassen.

Eine Kalibrierung der Innenwiderstandsmessung wird dann durchgeführt, wenn die Referenzstromquelle 12 nicht mit der Referenzelektrode RE verbunden ist. Dazu wird die Referenzstromquelle 12 auf einen genauen Kalibrierwert $R_{cal}$ im Steuergerät 3 geschaltet. Der Spannungsabfall $R_{cal} \cdot I_{pr}$ ist der Referenzwert für die Innenwiderstandsmessung, wenn $R_{cal}$ auf den Zielwert $R_i$ der Temperaturregelung dimensioniert wird. Die Toleranzen der Signalaufbereitungseinheit 5 werden dadurch kompensiert. Die Innenwiderstandsmessung wird dabei nicht unterbrochen.

Eine Offsetkorrektur der Signalaufbereitungseinheit 5 wird dann durchgeführt, wenn kein anderes Signal verarbeitet werden muss. Dazu wird der Eingang der Signalaufbereitungseinheit 5 durch einen Schalter kurzgeschlossen (Ue = 0) und durch einen weiteren Schalter auf ein definiertes Gleichtaktpotential gelegt. Dabei wird dieselbe Abtastzeit wie bei der Erfassung der übrigen Messwerte vorgegeben. Der digitalisierte Wert wird zur Korrektur der Messwerte verwendet. Die Offsetkorrektur wird für jede Verstärkung der Signalaufbereitungseinheit 5 und für den Analog-Digital-Wandler durchgeführt. Der Lambda-Signalfluss wird dabei nicht unterbrochen.

Erfolgt die Datenübermittlung über die Digitalschnittstelle 8 zum uC in Form einer Übertragung eines Datenbursts, dann werden zunächst mehrere Lambdawerte bzw. die Tastverhältnisse mehrerer Taktperioden gesammelt, um dann zusammen mit Innenwiderstandsinformationen und den Kalibrierwerten in einem Datenpaket übertragen zu werden. Zur Herstellung einer zeitlichen Zuordnung zum Motortakt wird - wie bereits oben ausgeführt wurde - vom Steuergerät ein Kurbelwellentriggersignal bereitgestellt, von dem ausgehend für jede Übertragung eine Zeitmarke ausgewählt werden kann.

Die nachfolgende Auflistung zeigt Beispiele für mögliche Verwendungen von erhaltenen Messwerten, bei denen es sich stets um Spannungen handelt, die am jeweiligen Anschluss der Steuer- und Regeleinheit bei den jeweils vorgegebenen Betriebsbedingungen vorliegen:

Un0: RE-IPE, $I_p$=0, $I_{pr}$=0
Reger-Ist-Wert für Un-Erfassung in der Pulspause
(Un0-Regler)
Ri: RE-IPE, $I_p$=0, $I_{pr}$>0 → Un; Ri ≈ Un-Un0
Temperaturregelung, Kabelabfalldiagnose RE, IPE
Up0: APE-IPE, $I_p$=0, $I_{pr}$=0
Blackening-Schutz, Alterungsdiagnose, Ipcal-Aktivierung, Riape-Messung, Führungsgröße für Grenzstrombetrieb
Up: APE-IPE, $I_p$>0, $I_{pr}$=0
Kabelabfalldiagnose APE, IPE, Riape-Messung
LSF: LSF-Diagnosefunktion → Lambda-Sprung aus Un0-Up0
Rcal: RCAL-GND, $I_{pr}$ an Rcal
Kalibrierung Ri-Messung, Ipref-Korrektur für Lambdakennlinie
Ipcal: APE-MES, $I_p$ an Rmess
Pumpstrom-Kalibrierung
Rzu: RE-IPE, $I_p$>0, $I_{pr}$=0
Korrektur Ri-Messung Pumpzelle, Sollwertkorrektur Unav-Regelung, Kabelabfall-Erkennung
Rgnd: RG-GND, $I_p$>0 bei Gegenpulsbetrieb
$I_p$-Bestimmung zur Kabelabfallerkennung Rcode.

Die Figur 3 zeigt zwei Ausführungsbeispiele für eine Signalaufbereitung in der Signalaufbereitungseinheit 5.
Gemäß dem in der Figur 3a gezeigten Ausführungsbeispiel werden an einen Multiplexer MUX1 die Potentiale angelegt, die an den Anschlüssen APE, IPE, REM, APM, CAL, MEM, GND und RG der Auswerte- und Steuereinheit 1 vorliegen. Der Multiplexer MUX1 wird von der Steuerung 10 mit Schaltersteuersignalen smux beaufschlagt, so dass an einen nachgeschalteten Differenzverstärker Diff zwei jeweils zu erfassende Potentiale weitergegeben werden. Beim gezeigten Ausführungsbeispiel handelt es sich um $U_{ep}$ und Uem, d. h. die Potentiale, die an den Anschlüssen REM und IPE oder APM und IPE oder APE und MEM oder CAL und GND oder RG und GND der Auswerte- und Steuereinheit 1 vorliegen. Der Differenzverstärker verstärkt das Differenzsignal und gibt es mit definiertem Potentialbezug an den nachfolgenden Analog-Digital-Wandler 6 weiter.

Bei dem in der Figur 3b gezeigten Ausführungsbeispiel werden an einen Multiplexer MUX2 die Potentiale angelegt, die an den Anschlüssen RE, IPE, APE, MES, RG, CAL und GND der Auswerte- und Steuereinheit 1 vorliegen. Die in der Figur 1 dargestellten Anschlüsse REM, APM und MEM sowie die Filter $R_{fr}$-$C_{fr}$, $R_{fp}$-$C_{fp}$ und $R_{fm}$-Cfm können bei diesem Ausführungsbeispiel entfallen. Der in der Figur 2 gezeigte Multiplexer MUX2 wird von der Steuerung 10 mit Schaltersteuersignalen smux beaufschlagt. Ein Ausgang des Multiplexers MUX2 ist über Ohmsche Widerstände MUM und $R_{f1}$ sowie einen Kondensator $C_{f1}$ mit Masse verbunden. Der andere Ausgang des Multiplexers MUX2 ist über Ohmsche Widerstände MUP und $R_{f2}$ sowie einen Kondensator $C_{f2}$ mit Masse verbunden.

Der masseferne Anschluss des Kondensators $C_{f2}$ ist über einen Ohmschen Widerstand $R_{EP}$ mit einem Eingang eines Differenzverstärkers Diff verbunden. Der masseferne Anschluss des Kondensators Cf1 ist über einen Ohmschen Widerstand REM mit dem zweiten Eingang des Differenzverstärkers Diff verbunden. Zwischen dem massefernen Anschluss des Kondensators $C_{f1}$ und dem massefernen Anschluss des Kondensators $C_{f2}$ ist ein Kondensator $C_{fd}$ geschaltet. Bei den an den Eingängen des Differenzverstärkers Diff anliegenden Signale handelt es sich um die Potentiale, die an den Anschlüssen RE und IPE oder APE und IPE oder APE und MES oder CAL und GND oder RG und GND der Steuer- und Reglereinheit 1 anliegen. Der Differenzverstärker verstärkt das Differenzsignal und gibt es mit definiertem Potentialbezug an den nachfolgenden Analog-Digital-Wandler 6 weiter.

**Patentansprüche**

1.   Auswerte- und Steuereinheit (1) für eine Breitband-Lambdasonde, mit

- einer Signalaufbereitungseinheit (5),
- einem der Signalaufbereitungseinheit nachgeschalteten Analog-Digital-Wandler (6),
- einem dem Analog-Digital-Wandler nachgeschalteten digitalen Pumpstromregler (7),
- einer mit dem digitalen Pumpstromregler verbundenen Digitalschnittstelle (8),
- einer mit dem digitalen Pumpstromregler verbundenen Steuerung (10),
- einer Pumpstromquelle (11) zur Bereitstellung eines Pumpstromes,
- einem inneren Pumpelektrodenanschluss (IPE),
- einem äußeren Pumpelektrodenanschluss (APE) und
- einem Referenzelektrodenanschluss (RE), wobei
- die Signalaufbereitungseinheit (5) zur Ermittlung eines Istwertes für den Pumpstromregler (7) der Lambdasonde vorgesehen ist und wobei
- die Signalaufbereitungseinheit (5) des Weiteren zur Ermittlung von weiteren Informationen über den Betriebszustand der Breitband-Lambdasonde vorgesehen ist und wobei
- die weiteren Informationen über den Betriebszustand der Breitband-Lambdasonde über die Digitalschnittstelle (8) ausgebbar sind,

wobei die Signalaufbereitungseinheit (5) einen von der Steuerung (10) gesteuerten Multiplexer und einen Differenzverstärker umfasst, wobei der Multiplexer jeweils zwei zu erfassende Potentiale mit den Eingängen des Differenzverstärkers verbindet, der das Differenzsignal verstärkt und mit definiertem Potentialbezug an den Analog-Digital-Wandler (6) weitergibt.

2.   Auswerte- und Steuereinheit nach Anspruch 1, **dadurch gekennzeichnet, dass** die von der Signalaufbereitungseinheit (5) ermittelten weiteren Informationen über den Betriebszustand der Breitband-Lambdasonde über einen Analog-Digital-Wandler (6) direkt der Digitalschnittstelle (8) zuführbar sind.

3.   Auswerte- und Steuereinheit nach Anspruch 1, **dadurch gekennzeichnet, dass** die von der Signalaufbereitungseinheit (5) ermittelten weiteren Informationen über den Betriebszustand der Breitband-Lambdasonde über einen Analog-Digital-Wandler (6) an einen Zwischenspeicher (9a) weitergeleitet und dort abgespeichert werden und die im Zwischenspeicher (9) abgespeicherten Informationen gesammelt in Form eines Datenbursts der Digitalschnittstelle (8) zuführbar sind.

**4.** Auswerte- und Steuereinheit nach Anspruch 1, **dadurch gekennzeichnet, dass** die von der Signalaufbereitungseinheit (5) ermittelten weiteren Informationen über den Betriebszustand der Breitband-Lambdasonde über einen Analog-Digital-Wandler (6) an einen Zwischenspeicher (9a) weitergeleitet und dort an vorgegebenen Adressen abgespeichert werden und die an den vorgegebenen Adressen abgespeicherten Informationen über die Digitalschnittstelle (8) gezielt abrufbar sind.

**5.** Auswerte- und Steuereinheit nach einem der vorhergehenden Ansprüche, **dadurch gekennzeichnet, dass** die Pumpstromquelle (11) über einen Schalter (S7) mit dem inneren Pumpelektrodenanschluss (IPE) und über einen Schalter (S6) mit dem äußeren Pumpelektrodenanschluss (A-PE) verbunden ist, die Steuerung (10) zur Bereitstellung von Schaltersteuersignalen (s6,s7) für den Schalter (S7) und den Schalter (S6) vorgesehen ist und die Steuerung (10) die Schaltersteuersignale (s6,s7) in Abhängigkeit von digitalen Ausgangssignalen des Pumpstromreglers (7) derart bereitstellt, dass am inneren bzw. äußeren Pumpelektrodenanschluss (IPE,APE) ein impulsförmiger Pumpstrom ausgegeben wird.

**6.** Auswerte- und Steuereinheit nach Anspruch 5, **dadurch gekennzeichnet, dass** der impulsförmige Pumpstrom eine feste Frequenz, ein variables Tastverhältnis und ein einstellbares Vorzeichen aufweist.

**7.** Auswerte- und Steuereinheit nach Anspruch 6, **dadurch gekennzeichnet, dass** folgende Betriebsfälle vorgesehen sind:

A: Up0 > 0, Ip > 0:
Schalter (S6) zwischen der Pumpstromquelle (11) und dem äußeren Pumpelektrodenanschluss (APE) geschlossen; der innere Pumpelektrodenanschluss (IPE) ist mit Masse (GND) verbunden;
B: Up0 < 0, $I_p$ < 0:
Schalter (S7) zwischen der Pumpstromquelle (11) und dem inneren Pumpelektrodenanschluss (IPE) ist geschlossen; der äußere Pumpelektrodenanschluss (APE) ist mit Masse (GND) verbunden;
C: Up0 > 0, Ip < 0:
Schalter (S7) zwischen der Pumpstromquelle (11) und dem inneren Pumpelektrodenanschluss (IPE) ist geschlossen; der äußere Pumpelektrodenanschluss (APE) ist über einen Widerstand (RGND) mit Masse verbunden;
D: Up0 < 0, Ip > 0:
Schalter (S6) zwischen der Pumpstromquelle (11) und dem äußeren Pumpelektrodenanschluss (APE) ist geschlossen; der innere Pumpelektrodenanschluss (IPE) ist über einen Widerstand (RGND) mit Masse verbunden.

**8.** Auswerte- und Steuereinheit nach einem der Ansprüche 5 - 7, **dadurch gekennzeichnet, dass** die Signalaufbereitungseinheit (5) den Istwert für den Pumpstromregler, den Innenwiderstand der Breitband-Lambdasonde und die weiteren Informationen über den Betriebszustand der Breitband-Lambdasonde während der Impulspausen und während des Stromimpulses des impulsförmigen Pumpstromes ermittelt.

**9.** Auswerte- und Steuereinheit nach Anspruch 8, **dadurch gekennzeichnet, dass** die Signalaufbereitungseinheit (5) in jeder Impulspause Daten zur Ermittlung des Istwertes für den Pumpstromregler erfasst.

**10.** Auswerte- und Steuereinheit nach Anspruch 8 oder 9, **dadurch gekennzeichnet, dass** die Signalaufbereitungseinheit (5) in aufeinanderfolgenden Impulspausen Daten zur Ermittlung unterschiedlicher weiterer Informationen über den Betriebszustand der Breitband-Lambdasonde erfasst.

**11.** Auswerte- und Steuereinheit nach Anspruch 10, **dadurch gekennzeichnet, dass** die Signalaufbereitungseinheit (5) die Daten zur Ermittlung unterschiedlicher weiterer Informationen über den Betriebszustand der Breitband-Lambdasonde zyklisch erfasst.

**12.** Auswerte- und Steuereinheit nach einem der vorhergehenden Ansprüche, **dadurch gekennzeichnet, dass** sie eine Referenzstromquelle (12) enthält.

**13.** Auswerte- und Steuereinheit nach einem der vorhergehenden Ansprüche, **dadurch gekennzeichnet, dass** sie mehrere weitere Schalter (S1,S2,S3,S4,S5,S8,S9,-S10,S11,S12) aufweist und die Steuerung (10) zur Bereitstellung von Schaltersteuersignalen (s1,s2,s3,s4,s5,s8,-s9,s10,s11,s12) für diese weiteren Schalter vorgesehen ist.

14. Auswerte- und Steuereinheit nach Anspruch 13, **dadurch gekennzeichnet, dass** die Steuerung (10) die weiteren Schalter derart steuert, dass in den Impulspausen vorgegebene der weiteren Schalter geschlossen werden, um einen gewünschten Anschluss der Auswerte-und Steuereinheit mit einem gewünschten Bezugspotential zu verbinden.

15. Auswerte- und Steuereinheit nach einem der vorhergehenden Ansprüche, **dadurch gekennzeichnet, dass** sie einen Parameterspeicher (9b) aufweist, in welchem Datensätze abgespeichert sind, welche einer vorgegebenen Regelcharakteristik des digitalen Reglers (7) entsprechen.

16. Auswerte- und Steuereinheit nach einem der vorhergehenden Ansprüche, **dadurch gekennzeichnet, dass** eine der weiteren Informationen eine Information über das Vorliegen eines Kabelkurzschlusses oder eines Kabelabfalls ist.

17. Auswerte- und Steuereinheit nach einem der vorhergehenden Ansprüche, **dadurch gekennzeichnet, dass** zu den weiteren Informationen Informationen über die Ladungszustände der Elektroden der Breitband-Lambdasonde in verschiedenen Betriebszuständen der Breitband-Lambdasonde gehören.

18. Auswerte- und Steuereinheit nach einem der vorhergehenden Ansprüche, **dadurch gekennzeichnet, dass** eine der weiteren Informationen eine Information über eine Überspannung an einer Elektrode ist.

19. Auswerte- und Steuereinheit nach einem der vorhergehenden Ansprüche, **dadurch gekennzeichnet, dass** eine der weiteren Informationen eine Information über die Alterung der Breitband-Lambdasonde ist.

20. Auswerte- und Steuereinheit nach einem der vorhergehenden Ansprüche, **dadurch gekennzeichnet, dass** eine der weiteren Informationen eine Information über den Lambda1-Durchgang ist.

21. Auswerte- und Steuereinheit nach einem der vorhergehenden Ansprüche, **dadurch gekennzeichnet, dass** eine der weiteren Informationen eine Information über die Betriebsbereitschaft der Breitband-Lambdasonde ist.

## Claims

1. Evaluation and control unit (1) for a broadband lambda probe, having

   - a signal conditioning unit (5),
   - an analogue/digital converter (6) connected downstream of the signal conditioning unit,
   - a digital pump current regulator (7) connected downstream of the analogue/digital converter,
   - a digital interface (8) connected to the digital pump current regulator,
   - a controller (10) connected to the digital pump current regulator,
   - a pump current source (11) for providing a pump current,
   - an inner pump electrode connection (IPE),
   - an outer pump electrode connection (APE), and
   - a reference electrode connection (RE),
   - the signal conditioning unit (5) being provided for the purpose of determining an actual value for the pump current regulator (7) of the lambda probe, and
   - the signal conditioning unit (5) also being provided for the purpose of determining further information relating to the operating state of the broadband lambda probe, and
   - the further information relating to the operating state of the broadband lambda probe being able to be output via the digital interface (8),

   wherein the signal conditioning unit (5) comprises a multiplexer controlled by the controller (10) and a differential amplifier, the multiplexer in each case connecting two potentials to be measured to the inputs of the differential amplifier, which amplifies the differential signal and forwards it with a defined potential reference to the analogue/-digital converter (6).

2. Evaluation and control unit according to Claim 1, **characterized in that** the further information relating to the operating state of the broadband lambda probe, as determined by the signal conditioning unit (5), can be directly supplied to the digital interface (8) via an analogue/digital converter (6).

3. Evaluation and control unit according to Claim 1, **characterized in that** the further information relating to the operating state of the broadband lambda probe, as determined by the signal conditioning unit (5), is forwarded, via an analogue/digital converter (6), to a buffer memory (9a) and is stored there and the information stored in the buffer memory (9) can be supplied, in a collected manner in the form of a data burst, to the digital interface (8).

4. Evaluation and control unit according to Claim 1, **characterized in that** the further information relating to the operating state of the broadband lambda probe, as determined by the signal conditioning unit (5), is forwarded, via an analogue/digital converter (6), to a buffer memory (9a) and is stored there at predefined addresses and the information stored at the predefined addresses can be retrieved in a targeted manner via the digital interface (8).

5. Evaluation and control unit according to one of the preceding claims, **characterized in that** the pump current source (11) is connected to the inner pump electrode connection (IPE) via a switch (S7) and is connected to the outer pump electrode connection (APE) via a switch (S6), the controller (10) is provided for the purpose of providing switch control signals (s6, s7) for the switch (S7) and the switch (S6), and the controller (10) provides the switch control signals (s6, s7) on the basis of digital output signals from the pump current regulator (7) in such a manner that a pulsed pump current is output at the inner and outer pump electrode connections (IPE, APE).

6. Evaluation and control unit according to Claim 5, **characterized in that** the pulsed pump current has a fixed frequency, a variable duty cycle and an adjustable sign.

7. Evaluation and control unit according to Claim 6, **characterized in that** the following operating situations are provided:

A: $U_{p0} > 0$, Ip > 0:
switch (S6) between the pump current source (11) and the outer pump electrode connection (APE) is closed; the inner pump electrode connection (IPE) is connected to earth (GND);
B: $U_{p0} < 0$, Ip < 0:
switch (S7) between the pump current source (11) and the inner pump electrode connection (IPE) is closed; the outer pump electrode connection (APE) is connected to earth (GND);
C: $U_{p0} > 0$, Ip < 0:
switch (S7) between the pump current source (11) and the inner pump electrode connection (IPE) is closed; the outer pump electrode connection (APE) is connected to earth via a resistor ($R_{GND}$);
D: $U_{p0} < 0$, Ip > 0:
switch (S6) between the pump current source (11) and the outer pump electrode connection (APE) is closed; the inner pump electrode connection (IPE) is connected to earth via a resistor ($R_{GND}$).

8. Evaluation and control unit according to one of Claims 5-7, **characterized in that** the signal conditioning unit (5) determines the actual value for the pump current regulator, the internal resistance of the broadband lambda probe and the further information relating to the operating state of the broadband lambda probe during the pulse pauses and during the current pulse of the pulsed pump current.

9. Evaluation and control unit according to Claim 8, **characterized in that** the signal conditioning unit (5) acquires data for determining the actual value for the pump current regulator in each pulse pause.

10. Evaluation and control unit according to Claim 8 or 9, **characterized in that** the signal conditioning unit (5) acquires data for determining different further information relating to the operating state of the broadband lambda probe in successive pulse pauses.

11. Evaluation and control unit according to Claim 10, **characterized in that** the signal conditioning unit (5) cyclically acquires the data for determining different further information relating to the operating state of the broadband lambda probe.

12. Evaluation and control unit according to one of the preceding claims, **characterized in that** it contains a reference current source (12).

13. Evaluation and control unit according to one of the preceding claims, **characterized in that** it has a plurality of further switches (S1, S2, S3, S4, S5, S8, S9, S10, S11, S12) and the controller (10) is provided for the purpose of providing switch control signals (s1, s2, s3, s4, s5, s8, s9, s10, s11, s12) for these further switches.

14. Evaluation and control unit according to Claim 13, **characterized in that** the controller (10) controls the further switches in such a manner that predefined switches of the further switches are closed in the pulse pauses in order to connect a desired connection of the evaluation and control unit to a desired reference potential.

15. Evaluation and control unit according to one of the preceding claims, **characterized in that** it has a parameter memory (9b) which stores data records corresponding to a predefined regulating characteristic of the digital regulator (7).

16. Evaluation and control unit according to one of the preceding claims, **characterized in that** one of the further items of information is an item of information relating to the presence of a cable short circuit or cable waste.

17. Evaluation and control unit according to one of the preceding claims, **characterized in that** the further information includes information relating to the states of charge of the electrodes of the broadband lambda probe in different operating states of the broadband lambda probe.

18. Evaluation and control unit according to one of the preceding claims, **characterized in that** one of the further items of information is an item of information relating to an overvoltage at an electrode.

19. Evaluation and control unit according to one of the preceding claims, **characterized in that** one of the further items of information is an item of information relating to the ageing of the broadband lambda probe.

20. Evaluation and control unit according to one of the preceding claims, **characterized in that** one of the further items of information is an item of information relating to the lambda 1 crossing.

21. Evaluation and control unit according to one of the preceding claims, **characterized in that** one of the further items of information is an item of information relating to the operational readiness of the broadband lambda probe.


**Revendications**

1. Unité (1) d'évaluation et de commande pour sonde lambda à large bande, l'unité présentant :

   une unité (5) de préparation de signaux,
   un convertisseur analogique-numérique (6) raccordé en aval de l'unité de préparation de signaux,
   un régulateur numérique (7) de courant de pompage raccordé en aval du convertisseur analogique-numérique,
   une interface numérique (8) raccordée au régulateur numérique de courant de pompage,
   une commande (10) raccordée au régulateur numérique de courant de pompage,
   une source (11) de courant de pompage qui délivre un courant de pompage,
   une borne intérieure (IPE) d'électrode de pompage,
   une borne extérieure (APE) d'électrode de pompage et
   une borne (RE) d'électrode de référence,
   l'unité de préparation de signaux (5) étant prévue pour déterminer une valeur effective pour le régulateur (7) de courant de pompage de la sonde lambda, et
   l'unité (5) de préparation de signaux étant en outre prévue pour déterminer d'autres informations sur l'état de fonctionnement de la sonde lambda à large bande et
   les autres informations sur l'état de fonctionnement de la sonde lambda à large bande pouvant être délivrées par l'intermédiaire de l'interface numérique (8),
   l'unité de préparation de signaux (5) comprenant un multiplexeur commandé par la commande (10) et un amplificateur différentiel, le multiplexeur reliant respectivement deux potentiels à détecter aux entrées de l'amplificateur différentiel, qui amplifie le signal différentiel et le transmet au convertisseur analogique-numérique (6) avec une référence de potentiel définie.

2. Unité d'évaluation et de commande selon la revendication 1, **caractérisée en ce que** les autres informations concernant l'état de fonctionnement de la sonde lambda à large bande déterminées par l'unité (5) de préparation de signaux peuvent être amenées directement à l'interface numérique (8) par l'intermédiaire d'un convertisseur analogique-numérique (6).

3. Unité d'évaluation et de commande selon la revendication 1, **caractérisée en ce que** les autres informations concernant l'état de fonctionnement de la sonde lambda à large bande déterminées par l'unité (5) de préparation de signaux sont transmises par l'intermédiaire d'un convertisseur analogique-numérique (6) à une mémoire intermédiaire (9a) pour y être conservées, les informations conservées dans la mémoire intermédiaire (9) pouvant être amenées à l'interface numérique (8) en étant rassemblées sous la forme d'une salve de données.

**4.** Unité d'évaluation et de commande selon la revendication 1, **caractérisée en ce que** les autres informations concernant l'état de fonctionnement de la sonde lambda à large bande déterminées par l'unité (5) de préparation de signaux sont transmises par l'intermédiaire d'un convertisseur analogique-numérique (6) à une mémoire intermédiaire (9a) pour y être conservées en des adresses prédéterminées, les informations conservées aux adresses prédéterminées pouvant être demandées de manière contrôlée par l'intermédiaire de l'interface numérique (8).

**5.** Unité d'évaluation et de commande selon l'une des revendications précédentes, **caractérisée en ce que** la source (11) de courant de pompage est raccordée par l'intermédiaire d'un commutateur (S7) à la borne intérieure (IPE) d'électrode de pompage et par l'intermédiaire d'un commutateur (S6) à la borne extérieure (APE) d'électrode de pompage, la commande (10) étant prévue pour délivrer des signaux (s6, s7) de commande de commutateur pour le commutateur (S7) et la commutateur (S6) et la commande (10) délivrant les signaux (s6, s7) de commande de commutateur en fonction de signaux numériques de sortie du régulateur (7) de courant de pompage de telle sorte qu'un courant de pompage en impulsion soit délivré sur la borne intérieure et la borne extérieure (IPE, APE) de l'électrode de pompage.

**6.** Unité d'évaluation et de commande selon la revendication 5, **caractérisée en ce que** le courant de pompage en impulsion présente une fréquence fixe, un taux d'échantillonnage variable et un signe réglable.

**7.** Unité d'évaluation et de commande selon la revendication 6, **caractérisée en ce que** les cas de fonctionnement suivants sont prévus :

A : $U_{p0} > 0$, $I_p > 0$ :
commutateur (S6) entre la source (11) du courant de pompage et la borne extérieure (APE) d'électrode de pompage fermé; borne intérieure (IPE) d'électrode de pompage reliée à la masse (GND);
B : $U_{p0} < 0$, $I_p < 0$ :
commutateur (S7) entre la source (11) de courant de pompage et la borne intérieure (IPE) d'électrode de pompage fermé; borne extérieure (APE) d'électrode de pompage reliée à la masse (GND);
C : $U_{p0} > 0$, $I_p < 0$ :
commutateur (S7) entre la source (11) de courant de pompage et la borne intérieure (IPE) d'électrode de pompage fermé; borne extérieure (APE) d'électrode de pompage reliée à la masse par l'intermédiaire d'une résistance ($R_{GND}$);
D : $U_{p0} < 0$, $I_p > 0$ :
commutateur (S6) entre la source (11) de courant de pompage et la borne extérieure (APE) d'électrode de pompage fermé; borne intérieure (IPE) d'électrode de pompage reliée à la masse par l'intermédiaire d'une résistance ($R_{GND}$).

**8.** Unité d'évaluation et de commande selon l'une des revendications 5 à 7, **caractérisée en ce que** l'unité (5) de préparation de signaux détermine la valeur effective pour le régulateur de courant de pompage, la résistance interne de la sonde lambda à large bande et les autres informations concernant l'état de fonctionnement de la sonde lambda à large bande pendant les pauses entre impulsions et pendant l'impulsion de courant du courant de pompage en impulsions.

**9.** Unité d'évaluation et de commande selon la revendication 8, **caractérisée en ce que** l'unité (5) de préparation de signaux saisit lors de chaque pause entre impulsions de données permettant de déterminer la valeur effective pour le régulateur de courant de pompage.

**10.** Unité d'évaluation et de commande selon les revendications 8 ou 9, **caractérisée en ce que** l'unité (5) de préparation de signaux saisit pendant des pauses successives entre impulsions des données permettant de déterminer différentes autres informations sur l'état de fonctionnement de la sonde lambda à large bande.

**11.** Unité d'évaluation et de commande selon la revendication 10, **caractérisée en ce que** l'unité (5) de préparation de signaux saisit les données permettant de déterminer différentes autres informations concernant l'état de fonctionnement de la sonde lambda à large bande cycliquement.

**12.** Unité d'évaluation et de commande selon l'une des revendications précédentes, **caractérisée en ce qu'**elle contient une source (12) de courant de référence.

**13.** Unité d'évaluation et de commande selon l'une des revendications précédentes, **caractérisée en ce qu'**elle présente plusieurs autres commutateurs (S1, S2, S3, S4, S5, S8, S9, - s10, S11, S12) et **en ce que** la commande (10) délivrant les signaux de commande de commutateur (s1, s2, s3, s4, s5, s8, - s9, s10, s11, s12) est prévue pour ses autres commutateurs.

**14.** Unité d'évaluation et de commande selon la revendication 13, **caractérisée en ce que** la commande (10) commande les autres commutateurs de telle sorte que dans les pauses entre les impulsions, certains des autres commutateurs soient fermés pour relier à un potentiel de référence souhaité une borne souhaitée de l'unité d'évaluation et de commande.

**15.** Unité d'évaluation et de commande selon l'une des revendications précédentes, **caractérisée en ce qu'**elle présente une mémoire (9b) à paramètres dans laquelle sont conservés des jeux de données qui correspondent à une caractéristique prédéterminée de régulation du régulateur numérique (7).

**16.** Unité d'évaluation et de commande selon l'une des revendications précédentes, **caractérisée en ce que** l'une des autres informations est une information sur la présence d'un court-circuit sur un câble ou d'une défaillance d'un câble.

**17.** Unité d'évaluation et de commande selon l'une des revendications précédentes, **caractérisée en ce que** des informations concernant l'état de charge des électrodes de la sonde lambda à large bande dans différents états de fonctionnement de la sonde lambda à large bande font partie des autres informations.

**18.** Unité d'évaluation et de commande selon l'une des revendications précédentes, **caractérisée en ce que** l'une des autres informations est une information concernant une surtension sur une électrode.

**19.** Unité d'évaluation et de commande selon l'une des revendications précédentes, **caractérisée en ce que** l'une des autres informations est une information sur le vieillissement de la sonde lambda à large bande.

**20.** Unité d'évaluation et de commande selon l'une des revendications précédentes, **caractérisée en ce que** l'une des autres informations est une information sur le passage par lambda-1.

**21.** Unité d'évaluation et de commande selon l'une des revendications précédentes, **caractérisée en ce que** l'une des autres informations est une information concernant le bon état de fonctionnement de la sonde lambda à large bande.

Fig. 1

EP 2 277 035 B2

**Fig. 2**

# Fig. 3

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4568443 A
- DE 19838466 A1
- DE 10145804 B4
- DE 10221392 B4
- DE 10163912 A1
- DE 10216724 C1
- DE 102004047797 A1
- DE 19836128 A1